# EUROPÄISCHE PATENTANMELDUNG

(11) **EP 1 315 128 A1**
(43) Veröffentlichungstag der Anmeldung: **28.05.2003**
(21) Anmeldenummer: 01127895.9
(22) Anmeldetag: 23.11.2001
(51) Int. Cl.: G07F 7/00, G07F 17/20, G07F 17/42

(54) **Verfahren zur Nutzung automatischer Anlagen**

(71) Anmelder: SCHEIDT & BACHMANN GMBH, D-41238 Mönchengladbach (DE)
(72) Erfinder: Miller, Norbert, Dr., 41063 Mönchengladbach (DE); Classen, Dieter Dipl. Ing, 41352 Korschenbroich (DE)
(74) Vertreter: Stenger, Watzke & Ring Patentanwälte

(57) **Zusammenfassung**

Um ein Verfahren zur Berechtigung von Nutzern zur Nutzung von in einem Ortsbereich einer Zahlstation positionierter automatischer Anlagen anzugeben, bei welchem der Aufwand in bezug auf Beschaffung und Bereithaltung von Datenträgern ebenso entfällt wie die Notwendigkeit aufwendiger Ausleseeinrichtungen im Bereich der automatischen Anlagen, wird vorgeschlagen, daß der Nutzer unter Auswahl und Bezahlung geplanten Nutzungsart an einer Zahlstation einen Nutzungscode empfängt, welchen er an der automatischen Anlage eingibt, woraufhin ein Rechner der automatischen Anlage die Gültigkeit des Nutzungscodes prüft und die Anlage für die gewählte Nutzung freigibt.

## Beschreibung

Die vorliegende Erfindung betrifft ein Verfahren zur Berechtigung von Nutzern zur Nutzung von in einem Ortsbereich einer Zahlstation positionierter automatischer Anlagen.

Automatische Anlagen im Ortsbereich von Zahlstationen und deren selbständige Nutzung durch die Nutzer in Abhängigkeit von vorhergehenden Zahlvorgängen sind an sich bekannt. Beispielsweise werden auf Tankstellen Waschanlagen, Ölautomaten und dergleichen derart betrieben, daß der Nutzer an einer Zahlstation die gewünschte Nutzung auswählt, bezahlt und einen Chip, eine Speicherkarte oder dergleichen erhält. Diese gibt der Nutzer im Bereich der automatischen Anlage in einen Prüfrechner ein, welcher anhand des eingegebenen Datenträgers die Nutzungsart bestimmt und die automatische Anlage für die gewählte Nutzung freigibt.

Ein Nachteil der vorbekannten Verfahren besteht in der Aufwendigkeit in bezug auf die Beschaffung und Bereithaltung der Datenträger sowie in der Auslegung der Datenträgerausleseanlagen im Bereich der automatischen Anlagen. Sämtliche Verfahren, seien es Magnetstreifenleser, Chipkartenleser oder dergleichen erfordern aufwendige Vorrichtungen zum Einziehen und Auslesen sowie zum Speichern der Datenträger. Darüber hinaus sind derartige Datenträger bekanntermaßen manipulierbar und die Speicherorte für die Datenträger im Bereich der automatischen Anlagen gegen äußere Eingriffe nur schlecht gesichert.

Ausgehend vom vorbeschriebenen Stand der Technik liegt der vorliegenden Erfindung die **Aufgabe** zugrunde, ein Verfahren zur Berechtigung von Nutzern zur Nutzung von in einem Ortsbereich einer Zahlstation positionierter automatischer Anlagen anzugeben, bei welchem der Aufwand in bezug auf Beschaffung und Bereithaltung von Datenträgern ebenso entfällt wie die Notwendigkeit aufwendiger Ausleseeinrichtungen im Bereich der automatischen Anlagen. Darüber hinaus soll die Sicherheit derartiger Anlagen erhöht werden.

Zur technischen **Lösung** der Aufgabe wird vorgeschlagen, daß der Nutzer unter Auswahl und Bezahlung geplanten Nutzungsart an einer Zahlstation einen Nutzungscode empfängt, welchen er an der automatischen Anlage eingibt, woraufhin ein Rechner der automatischen Anlage die Gültigkeit des Nutzungscodes prüft und die Anlage für die gewählte Nutzung freigibt.

Die Erfindung basiert auf der einfachen Übertragung eines Nutzungscodes. Dieser kann gemäß einem vorteilhaften Vorschlag der Erfindung an der Zahlstation einfach ausgedruckt werden, beispielsweise auf der Quittung. In erfindungsgemäßer Weise braucht die automatische Anlage nurmehr mit einem Tastenfeld versehen sein, beispielsweise auch in Form eines Touchscreens, so daß der Nutzer lediglich den ihm mitgeteilten Code eingibt und ein Rechner der automatischen Anlage nach Prüfung der Gültigkeit Nutzungscodes die Anlage für die gewünschte Nutzung freigibt.

Durch die Erfindung entfällt die Beschaffung und Bereithaltung von Datenträgern ebenso wie die aufwendige Auslesestation seitens der automatischen Anlage. Darüber hinaus werden die Codes verbraucht, stehen also nicht mehr für unberechtigte Nutzungen zur Verfügung.

In vorteilhafter Weise enthält der Nutzungscode eine Zahlinformation, so daß Verfallszeiträume festgelegt werden können.

Für die Überprüfung der Gültigkeit des Nutzungscodes stehen verschiedene Möglichkeiten alternativ oder zusammenwirkend zur Verfügung. Ist die automatische Anlage bzw. deren Rechner in einer dauernden oder zumindest zeitweisen online-Verbindung mit einem Rechner der Zahlstation, kann die Gültigkeit des Nutzungscodes direkt im Abgleich zwischen den Rechnern ermittelt werden, da der Rechner der Zahlstation den Nutzungscode innerhalb des Gültigkeitszeitraumes erstellt hat. Insbesondere eignet sich die Erfindung aber auch für nicht vernetzte Systeme. Hier können synchronisierte Datenbanken einerseits auf Seiten der Zahlstation für die Erstellung und Ausgabe des Nutzungscodes und andererseits auf Seiten der automatischen Anlage für die Bestimmung der Nutzungsart und die Freigabe der Anlage genutzt werden. Auch können die Codierungen derart gebildet sein, daß der anlagenseitige Rechner mittels einer auf die Erstellungssoftware abgestimmten Interpretationssoftware die Gültigkeit des Codes überprüfen kann.

Der Code kann beispielsweise Informationen zur Nutzungsart, zum Beispiel eine Waschprogrammnummer oder dergleichen, eine Stationsidentifikationsnummer, einen Zeitstempel, eine Verfallsgrenze und dergleichen enthalten.

In vorteilhafter Weise können die Codes verschlüsselt sein, wobei sich beispielsweise aktuelle "3DES"-Codierungen eignen, die sich anlagenseitig decodieren und interpretieren lassen.

Eine Scannereinheit zur automatischen Auslesung einer Codefolge oder Erkennung eines Barcodes kann mit einfachen Mitteln anlagenseitig eingebaut werden, um gegebenenfalls das Eintippen langer Codes vermeiden oder erleichtern zu können. Allerdings sind derartige zusätzliche Einheiten bereits anlagenseitig aufwendig und stellen nur eine Ausführungsform der Erfindung dar.

Das erfindungsgemäße Verfahren vereinfacht die Abwicklung zum Betrieb automatischer Anlagen und den Aufwand in bezug auf Datenträger einerseits und Leseeinheiten sowie Speichervorrichtungen für die Datenträger erheblich. Automatische Anlagen dieser Betriebsweise werden durch die Erfindung erheblich wirtschaftlicher und einfacher, so daß die Störanfälligkeit und der Erwartungsbedarf reduziert werden. Auch ist die Sicherheit verbessert.

Das erfindungsgemäße Verfahren eignet sich für eine große Vielzahl von automatischen Anlagen, seien es Betriebsanlagen wie Waschstraße bzw. -hallen, Ölautomaten, Reinigungsautomaten, aber auch Warenausgabeautomaten und dergleichen können in der beschriebenen Verfahrensweise eingesetzt werden.

Weitere Vorteile und Merkmale der Erfindung ergeben sich aus der folgenden Beschreibung anhand der Figuren. Dabei zeigt:

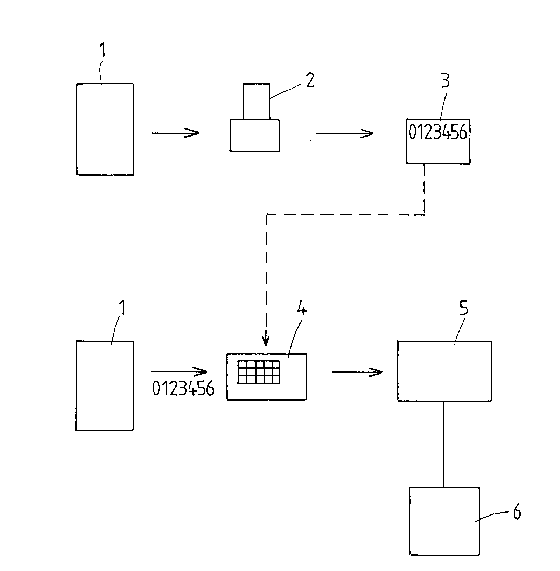

- Fig. 1: eine schematische Darstellung eines Ablaufes gemäß dem erfindungsgemäßen Verfahren.

Gemäß Fig. 1 wird durch eine Benutzung einer nicht gezeigten automatischen Anlage beabsichtigende Person 1 im Bereich einer Zahlstation 2 die Nutzungsart ausgewählt, beispielsweise ein Waschprogramm für ein Kraftfahrzeug oder dergleichen und bezahlt. Die Zahlstation 2 gibt daraufhin in gedruckter Form einen Nutzungscode 3 aus, der mittels eines nicht gezeigten Rechners von der Zahlstation festgelegt ist. Dieser Code umfaßt Programminformationen, Informationen zur Identifizierung der automatischen Anlage sowie beispielsweise Zeitinformationen.

Der Nutzer 1 bewegt sich zu der zur Nutzung geplanten automatischen Anlage und gibt dort beispielsweise in einem Tastaturfeld 4 den empfangenen Code ein, den er von dem Ausdruck abliest und eintippt. Mittels eines Rechners, symbolisiert durch den Bereich 5, wird die Gültigkeit des Nutzungscodes überprüft, beispielsweise durch Zerlegung des Codes, Entnahme der Identifikation, Programminformationen und dergleichen. Im Falle eines positiven Prüfungsergebnisses wird die Steuerungseinheit 6 der automatischen Anlage für die erwünschte Nutzung freigegeben bzw. zur Freigabe angesteuert.

Das beschriebene Ausführungsbeispiel dient nur der Erläuterung und ist nicht beschränkend.

### Bezugszeichenliste

- 1: Nutzer
- 2: Zahlstation
- 3: Codeausdruck
- 4: Tastaturfeld
- 5: Überprüfungseinheit
- 6: Steuereinheit

## Patentansprüche

1. Verfahren zur Berechtigung von Nutzern zur Nutzung von in einem Ortsbereich einer Zahlstation positionierter automatischer Anlagen, wobei der Nutzer unter Auswahl und Bezahlung einer geplanten Nutzungsart an einer Zahlstation einen Nutzungscode empfängt, welchen er an der automatischen Anlage eingibt, woraufhin ein Rechner der automatischen Anlage die Gültigkeit des Nutzungscodes prüft und die Anlage für die gewählte Nutzung freigibt.

2. Verfahren nach Anspruch 1, **dadurch gekennzeichnet, daß** der Nutzungscode dem Nutzer in Form eines Ausdrucks übergeben wird.

3. Verfahren nach einem der vorhergehenden Ansprüche, **dadurch gekennzeichnet, daß** der Nutzungscode an der automatischen Anlage mittels eines Tastenfeldes eingegeben wird.

4. Verfahren nach einem der vorhergehenden Ansprüche, **dadurch gekennzeichnet, daß** der Nutzungscode eine Zeitinformation enthält.

5. Verfahren nach einem der vorhergehenden Ansprüche, **dadurch gekennzeichnet, daß** die Gültigkeit des Nutzungscodes zwischen automatischer Anlage und Zahlstation im online-Betrieb geprüft wird.

6. Verfahren nach einem der vorhergehenden Ansprüche, **dadurch gekennzeichnet, daß** die Prüfung des Nutzungscodes an der automatischen Anlage unter Nutzung vorgespeicherter Codes erfolgt.

7. Verfahren nach einem der vorhergehenden Ansprüche, **dadurch gekennzeichnet, daß** die Gültigkeit und Inhalt des Nutzungscodes anhand der Zerlegung mittels eines vorgegebenen Algorithmus geprüft werden.

8. Verfahren nach einem der vorhergehenden Ansprüche, **dadurch gekennzeichnet, daß** der Nutzungscode an der Zahlstation verschlüsselt und an der automatischen Anlage entschlüsselt wird.

9. Verfahren nach einem der vorhergehenden Ansprüche, **dadurch gekennzeichnet, daß** der Nutzungscode dem Nutzer in automatisch lesbarer Form übergeben wird.

10. Verfahren nach Anspruch 9, **dadurch gekennzeichnet, daß** der Nutzungscode in Form eines Barcodes übergeben wird.
